Europäisches Patentamt

(19) European Patent Office

Office européen des brevets

(11) Numéro de publication: **0 134 869**
**B1**

## FASCICULE DE BREVET EUROPEEN

(45) Date de publication du fascicule du brevet:
**07.01.88**

(51) Int. Cl.⁴: **B 05 C 15/00,** B 01 D 53/34

(21) Numéro de dépôt: **83401839.2**

(22) Date de dépôt: **20.09.83**

(54) **Procédé de lavage des effluents gazeux sortant des cabines d'application de peinture et de décapage des caillebotis constituant le sol de ces cabines, et cabines pour la mise en oeuvre de ce procédé.**

(43) Date de publication de la demande:
**27.03.85 Bulletin 85/13**

(45) Mention de la délivrance du brevet:
**07.01.88 Bulletin 88/1**

(84) Etats contractants désignés:
**AT BE CH DE GB IT LI LU NL SE**

(56) Documents cités:
**DE - A - 2 433 193**
**DE - A - 2 848 735**
**DE - B - 2 503 347**
**DE - U - 7 900 267**
**GB - A - 828 778**

(73) Titulaire: **SOCIETE CARRIER Société dite:, 90, Rue Rouget-de-Lisle, F-92153 Suresnes (FR)**

(72) Inventeur: **Kenzey, Patrick, 34 Rue Georges Bernard, F-27000 Evreux (FR)**

(74) Mandataire: **Polus, Camille et al, c/o Cabinet Lavoix 2, Place d'Estienne d'Orves, F-75441 Paris Cedex 09 (FR)**

ACTORUM AG

**Description**

La présente invention concerne l'application de peinture en cabines et plus particulièrement l'application de peinture dans des cabines où les effluents correspondant à l'excédent de peinture pulvérisée sont dispersés en phase gazeuse sous forme d'aérosols, puis sont lavés avec une composition liquide généralement aqueuse à l'intérieur de corps de lavage.

On peut trouver une description de cabines d'application de peinture classiques avec lavage des effluents dans DE-A-2 848 735 qui décrit un procédé de lavage du type énoncé dans le préambule de la revendication 1 ainsi qu'une cabine d'application de peinture du type énoncé dans le préambule de la revendication 7. DE-A-2 433 193 décrit des compositions de lavage aqueuses contenant des électrolytes et ayant une densité d'au moins 1,01. GB-A-828 778 décrit des compositions de lavage aqueuses de pH basique.

Les cabines d'application de peinture comprennent généralement une enceinte dont le sol est constitué par un caillebotis. Les effluents gazeux sont aspirés vers le bas à travers les caillebotis qui reçoivent donc une partie de la peinture en excès.

En conséquence, les caillebotis doivent être périodiquement déposés afin d'être nettoyés. A cet effet, on utilisait, jusqu'à présent, différents moyens tels que les décapages chimiques, les décapages thermiques. Il est clair que ces opérations de nettoyage influent considérablement sur le coût de fonctionnement d'une cabine d'application de peinture.

La présente invention vise à éviter le démontage des caillebotis et donc vise à permettre le décapage des caillebotis in situ à l'aide d'une composition appropriée.

La présente invention vise en outre à permettre le lavage de l'effluent gazeux à l'aide de la même composition liquide et ainsi à simplifier considérablement le fonctionnement d'une cabine d'application de peinture.

A cet effet, la présente invention a pour objet un procédé de lavage des effluents gazeux sortant de cabines d'application de peinture et de décapage des caillebotis constituant le sol de ces cabines, procédé dans lequel, lors de l'application de la peinture, on fait passer les effluents gazeux à travers une composition de lavage aqueuse, caractérisé en ce que l'on utilise une composition de lavage contenant des sels métalliques détergents hydrosolubles, ces sels étant présents dans la composition en une proportion telle que la densité de la composition soit de 1,1 à 1,45 et le pH de la solution étant réglé entre 7 et 14, et périodiquement après application de la peinture, on immerge in situ les caillebotis dans ladite composition.

Les sels utilisés dans la composition sont avantageusement choisis parmi les carbonates, phosphates, nitrates, nitrites, sulfates, silicates, acétates, formiates, lactates, chlorures et leurs mélanges. Il s'agit généralement des sels alcalins ou alcalino-terreux lorsque ces derniers sont solubles dans l'eau.

En pratique, les sels peuvent représenter de 10 à plus de 50% en poids de la composition liquide.

La composition liquide peut en outre contenir des inhibiteurs de corrosion tels que des borates alcalins, des benzoates alcalins, des bases alcalines ou alcalino-terreuses, des amines solubles, des chromates, des bichromates, des mercaptobenzothiazolates, des benzo- ou tolyltriazoles sous forme acide ou neutralisés par des bases alcalines ou des amines ainsi que des phosphates d'amines. Ces inhibiteurs de corrosion peuvent être utilisés en faibles quantités (généralement moins de 1% en poids). La composition liquide peut également contenir des agents de solubilisation, tels que des toluène- ou xylène-sulfonates alcalins.

La fréquence et le temps d'immersion des caillebotis sont fonction du taux d'encrassement. Il est avantageux de pratiquer avant la première application de peinture une immersion des caillebotis avec la composition selon la présente invention. Ceci conduit à un dépôt des sels utilisés dans la composition selon la présente invention qui favorise le décapage de la peinture qui s'est fixée ultérieurement. Après avoir effectué un tel dépôt préalable, on peut notamment pratiquer une immersion quotidienne afin d'éviter la formation de dépôts de peinture trop importants.

En pratique, l'immersion peut être effectuée par simple inondation des caillebotis.

Les caillebotis peuvent être constitués de matières métalliques ou non. Ils peuvent en outre être revêtus ou traités afin de minimiser les problèmes de trop forte adhérence due à une rugosité trop importante du matériau dont ils sont constitués.

La présente invention a également pour objet une cabine d'application de peinture destinée notamment à la mise en œuvre d'un procédé selon la présente invention du type comprenant une enceinte dont le sol est constitué par un caillebotis, des moyens d'application de peinture à l'intérieur de cette enceinte, des moyens pour aspirer l'air vers le bas à travers les caillebotis et des moyens de lavage de l'air ayant traversé les caillebotis avec une composition liquide en circulation, caractérisée en ce qu'elle comprend des moyens pour inonder les caillebotis avec ladite composition liquide.

Les moyens pour inonder les caillebotis peuvent comprendre notamment des moyens pour obturer l'écoulement de la composition liquide à l'intérieur ou hors des moyens de lavage et des trop-pleins pour évacuer la composition liquide inondant les caillebotis.

L'invention est exposée ci-après plus en détail à l'aide de dessins représentant seulement un mode d'exécution.

La Fig. 1 est une vue en coupe partielle d'une cabine d'application de peinture selon la présente invention pendant la phase d'application de peinture.

La Fig. 2 est une vue en coupe partielle de la cabine d'application de peinture représentée sur la Fig. 1, mais pendant la phase de décapage.

La Fig. 3 est une vue en coupe partielle d'une autre cabine d'application de peinture selon la présente invention.

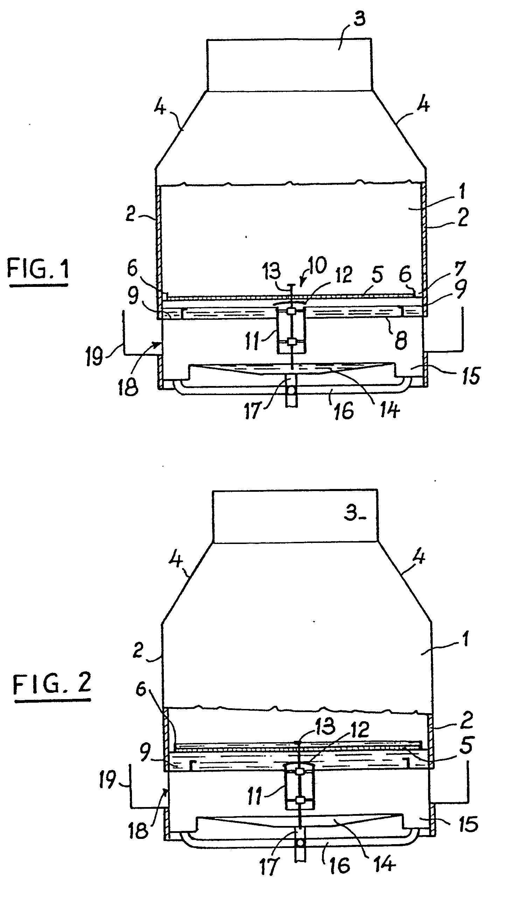

La cabine d'application de peinture représentée sur la Fig. 1 comprend une enceinte 1 délimitée sur ses côtés longitudinaux par deux parois parallèles verticales 2 qui se raccordent à une entrée d'air supérieure 3 plus étroite par des parois inclinées 4. L'enceinte 1 comprend un sol constitué par un caillebotis 5. Ce caillebotis comporte longitudinalement deux rebords 6 formant trop-plein ainsi que des bacs 7 disposés le long des parois 2 destinés à recevoir le liquide débordant des trop-pleins. Sous toute la surface du caillebotis est disposé un premier bac 8 de lavage qui est bordé le long des parois longitudinales 2 par des canaux d'alimentation 9. Dans la partie centrale des bacs de lavage 8 est disposée une série de tubes de lavage tels que 10. Ces tubes de lavage comprennent un tube cylindrique 11, raccordé de façon étanche au fond du bac 8 et dépassant de ce bac sur une hauteur déterminée. Sur la partie supérieure du tube cylindrique 11 est susceptible de venir s'appliquer un couvercle conique 12, servant d'obturateur, qui coulisse verticalement grâce à un système de tringlerie disposé à l'intérieur du tube cylindrique 11 et est commandé par une tige de commande 13 traversant le caillebotis 5.

Sous l'ensemble constitué par le premier bac de lavage 8 et le tube de lavage 10 est disposé un deuxième bac de lavage 14 comportant un fond central plat et des parois latérales se relevant légèrement vers les bords. Ce bac 14 est bordé le long des parois longitudinales 2 par des canaux d'évacuation 15 raccordés à des conduits 16 d'évacuation du liquide. Le fond plat du bac 14 est également raccordé à un conduit 17 d'évacuation du liquide et se raccorde lui-même au conduit 16.

Entre les deux bacs de lavage 8 et 14 l'enceinte 1 comprend sur ses parois longitudinales 2 des orifices 18 d'évacuation de l'air qui débouchent sur des conduits 19 raccordés à des moyens d'aspiration non représentés.

Comme représenté sur la Fig. 2, avant de procéder à l'application de peinture à l'intérieur de l'enceinte 1, par exemple sur des carrosseries d'automobiles transportées longitudinalement à l'intérieur de l'enceinte 1, on effectue une inondation du caillebotis 5 avec une composition selon la présente invention. A cet effet, on abaisse le couvercle 12 du tube de lavage 10 de façon à fermer l'écoulement vers le reste du corps de lavage, puis on introduit une composition liquide selon la présente invention dans les bacs longitudinaux 7. La composition se déverse par les trop-pleins 6 et remplit le bac 8 en inondant le caillebotis 5.

Puis, on arrête l'inondation des caillebotis et on soulève le couvercle 12 du tube de lavage 10. On amène alors la composition liquide selon la présente invention par les canaux 9. La composition se déverse dans les bacs de lavage 8 et passe à l'intérieur du cylindre 11 avant de tomber dans le bac de lavage 14.

L'application de peinture peut alors être effectuée sous aspiration d'air à travers les caillebotis 5. Au cours de cette opération, la peinture en excès qui traverse les caillebotis est recueillie par la composition liquide selon la présente invention au cours du passage de l'air sous le caillebotis puis dans le tube de lavage 10 et au-dessus du bac de lavage 14. La peinture passe ainsi dans la composition liquide qui est évacuée par le conduit 16 et recyclée vers les canaux d'alimentation 9. Lorsqu'on le juge nécessaire, on arrête l'opération d'application de peinture et on procède au décapage des caillebotis qui ont reçu certaines quantités de peinture. A cet effet, comme représenté sur la Fig. 2, on ferme le couvercle 12 du tube de lavage et on procède à l'inondation du caillebotis 5 comme lors de la phase préliminaire de traitement. La composition liquide utilisée est la même que lors du lavage de l'air contenant la peinture en excès et cette composition liquide est recyclée vers les bacs longitudinaux 7 jusqu'à ce que l'on obtienne un décapage satisfaisant du caillebotis 5.

La composition liquide contenant la peinture peut ensuite être traitée en continu comme décrit dans le brevet britannique 1 540 723.

Il est évident que bien d'autres types d'obturateurs peuvent être utilisés à la place de celui représenté sur les Fig. 1 et 2. C'est ainsi notamment que l'obturateur peut comprendre un fourreau cylindrique disposé à l'intérieur du tube cylindrique 11 et susceptible de venir s'appliquer sur le fond du deuxième bac de lavage 14. L'obturateur peut également comprendre un couvercle disposé non pas à la partie supérieure, mais à la partie inférieure du tube cylindrique 11.

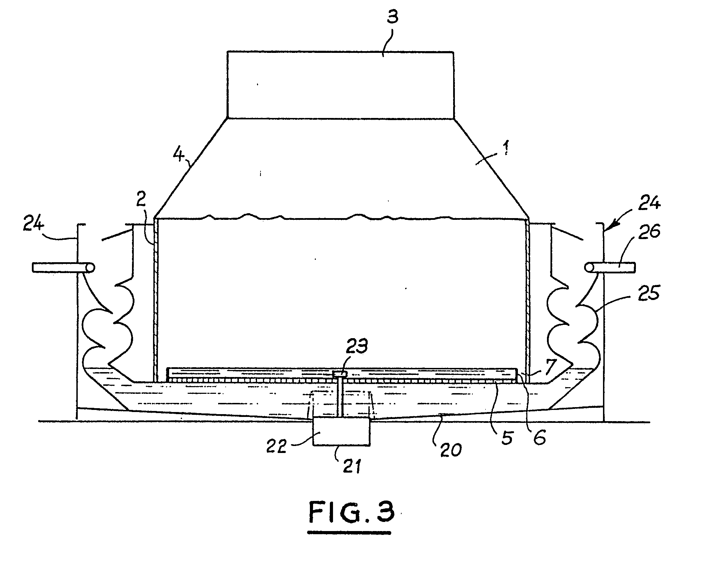

On a représenté sur la Fig. 3 une variante d'une cabine d'application de peinture permettant la mise en œuvre de la présente invention. Cette cabine comporte comme celle représentée sur les Fig. 1 et 2 une enceinte 1 comprenant des parois longitudinales 2, un orifice d'amenée d'air 3 qui se raccorde aux parois 2 par des parois inclinées 4. Le sol de l'enceinte comprend un caillebotis 5 et le long des parois 2 des bacs longitudinaux 7 séparés du caillebotis par un rebord 6. Sous le caillebotis 5 est disposé un bac 20 dont le fond est incliné de façon à déverser le liquide vers le centre du bac. Au centre du bac est disposé un caniveau 21 d'évacuation des liquides. Aux extrémités de la cabine d'application de peinture sont disposées des vannes 22 commandées par une tige 23 susceptibles de venir obturer en position basse le caniveau 21. De chaque côté de l'enceinte 1 sont disposés des dispositifs de lavage 24 comprenant un trajet vertical chicané 25 au-dessus duquel arrive par un conduit 26 la composition liquide qui est pulvérisée au-dessus du trajet chicané 25.

Après une immersion préalable comme dans le cas de l'enceinte présentée sur la Fig. 1, on procède à la phase d'application de peinture. Pendant cette phase, la composition liquide selon la présente invention est envoyée par les conduits 26 et parcourt les trajets chicanés 25 en lavant l'air qui est aspiré à travers ces trajets chicanés. La composition liquide s'écoule sur les parois inclinées du bac 20 et est recueillie dans les caniveaux 21. Lorsque l'application de peinture est terminée, on ferme la vanne 22 et on procède à l'inondation du caillebotis 5. La composition liquide qui déborde par les trop-pleins 6 est évacuée par les bacs longitudinaux 7.

On donnera ci-après des exemples de compositions liquides convenant pour la mise en œuvre de la présente invention.

Exemple 1

Composition liquide utilisable pour des peintures d'apprêt même à extrait sec élevé et pour des peintures classiques, utilisées dans l'industrie automobile, qu'elles soient dispersées, émulsionnées ou solubilisées en milieu organique.

La composition est la suivante:

| – Carbonate de potassium | 7,5 à 30% |
| – Acide phosphorique | 1,5 à 5,6% |
| – Potasse | 1,6 à 6,5% |
| – Benzotriazole | 0,002 à 0,01% |
| – Eau | QSP 100% |
| – pH | 8 à 14 |
| – Densité | 1,1 à 1,4 |

Cette composition peut être obtenue par addition à l'eau de carbonate de potassium, d'acide phosphorique, de potasse et de benzotriazole utilisé comme inhibiteur de corrosion, dans les proportions indiquées.

Exemple 2

Composition liquide utilisable pour des peintures hydrosolubles ou dispersées en milieu aqueux, ainsi que pour des peintures très fortement chargées en pigments métalliques en milieu organique.

La composition peut être la suivante:

| – Nitrate de calcium | 25 à 50% |
| – Nitrite de sodium | 25 à 40% |
| – Chromate de potassium | 0,01 à 0,1% |
| – Benzotriazole | 0,001 à 0,01% |
| – Eau | QSP 100% |
| – pH | 7 à 9 |
| – Densité | 1,2 à 1,45 |

Il convient de souligner que les compositions liquides utilisées dans la présente invention non seulement permettent le lavage des effluents gazeux et le décapage des caillebotis mais favorisent grandement, grâce à leur densité, la séparation ultérieure des peintures, par exemple par un procédé tel que décrit dans le brevet britannique 1 540 723.

Il convient de souligner également que les compositions utilisées dans la présente invention par leur nature n'ont pas de caractère agressif vis-à-vis des surfaces des caillebotis et, notamment, si ces surfaces sont métalliques. Il est donc possible de les recycler pendant fort longtemps, aussi bien d'ailleurs pendant la période d'application de peinture, que pendant la période de décapage des caillebotis.

On peut noter, en outre, que la période d'amortissement de la composition liquide par rapport à une installation classique est relativement courte (de l'ordre de 15 mois) et que le coût total d'exploitation d'une cabine d'application de peinture peut être réduit jusqu'à 80% après cette période.

**Revendications**

1. Procédé de lavage des effluents gazeux sortant de cabines d'application de peinture et de décapage des caillebotis constituant le sol de ces cabines, procédé dans lequel, lors de l'application de la peinture, on lave les effluents gazeux avec une composition de lavage aqueuse, caractérisé en ce que l'on utilise une composition de lavage contenant des sels métalliques détergents hydrosolubles, ces sels étant présents dans la composition en une proportion telle que la densité de la composition soit de 1,1 à 1,45 et le pH de la solution étant réglé entre 7 et 14, et périodiquement après application de la peinture, on immerge in situ les caillebotis dans ladite composition.

2. Procédé selon la revendication 1, caractérisé en ce que les sels sont choisis parmi les carbonates, phosphates, nitrates, nitrites, sulfates, silicates, acétates, formiates, lactates, chlorures et leurs mélanges.

3. Procédé selon la revendication 2, caractérisé en ce que l'on utilise une composition qui comprend de 7,5 à 30% en poids de carbonate de potassium, de 1,5 à 5,6% en poids d'acide phosphorique et de 1,6 à 6,5% en poids de potasse.

4. Procédé selon la revendication 2, caractérisé en ce que l'on utilise une composition qui comprend de 25 à 50% en poids de nitrate de calcium et de 25 à 40% en poids de nitrite de sodium.

5. Procédé selon l'une quelconque des revendications 1 à 4, caractérisé en ce qu'on effectue une immersion des caillebotis dans ladite composition préalablement à l'application de la peinture.

6. Procédé selon l'une quelconque des revendications 1 à 5, caractérisé en ce que l'on effectue l'immersion par inondation des caillebotis.

7. Cabine d'application de peinture destinée à la mise en œuvre d'un procédé selon l'une quelconque des revendications 1 à 6, du type comprenant une enceinte (1) dont le sol est constitué par un caillebotis (5), des moyens d'application de peinture à l'intérieur de cette enceinte, des moyens pour aspirer de l'air vers le bas à travers les caillebotis et des moyens de lavage (8, 10, 14; 20, 25) de l'air ayant traversé les caillebotis (5) avec une composition liquide en circulation, caractérisée en ce qu'elle comprend des moyens pour inonder les caillebotis avec ladite composition liquide.

8. Cabine selon la revendication 7, caractérisée en ce que les moyens pour inonder les caillebotis comprennent des moyens (12, 22) pour obturer l'écoulement de la composition liquide à l'intérieur ou hors des moyens de lavage et des trop-pleins (6) pour évacuer la composition liquide inondant les caillebotis.

**Patentansprüche**

1. Verfahren zum Waschen der Abluft von Spritzkabinen und zum Abbeizen der Gitterroste am Boden der Kabinen, wobei man die Abluft während des Spritzens der Farbe mit einer wässrigen Waschlösung wäscht, dadurch gekennzeichnet, dass man eine Waschzusammensetzung verwendet, die wasserlösliche Detergenzmetallsalze enthält, wobei diese Salze in der Zusammenetzung einen solchen Anteil bilden, dass die Dichte der Zusammensetzung 1,1 bis 1,45 und der pH-Wert der Lösung zwischen 7 und 14 eingestellt wird und dass man nach dem Spritzen der Farbe die Gitterroste in situ in die Zusammensetzung eintaucht.

2. Verfahren nach Anspruch 1, dadurch gekennzeichnet, dass die Salze Karbonate, Phosphate, Nitrate, Nitrite, Sulfate, Silicate, Azetate, Formiate, Lactate und/oder Chloride oder deren Mischungen sind.

3. Verfahren nach Anspruch 2, dadurch gekennzeichnet, dass man eine Zusammensetzung verwendet, die 7,5 bis 30 Gew.% Kaliumkarbonat, 1,5 bis 5,6 Gew.% Phosphorsäure und 1,6 bis 6,5 Gew.% Pottasche enthält.

4. Verfahren nach Anspruch 2, dadurch gekennzeichnet, dass man eine Zusammensetzung verwendet, die 25 bis 50 Gew.% Calciumnitrat und 25 bis 40 Gewichtsprozent Natriumnitrit enthält.

5. Verfahren nach einem der vorgehenden Ansprüche 1 bis 4, dadurch gekennzeichnet, dass man die Gitterroste in die Zusammensetzung vor dem Spritzen der Farbe eintaucht.

6. Verfahren nach einem der Ansprüche 1 bis 5, dadurch gekennzeichnet, dass man das Eintauchen durch Überfluten der Gitterroste bewirkt.

7. Spritzkabine zur Durchführung des Verfahrens nach einem der Ansprüche 1 bis 6, mit einem Gehäuse (1), dessen Boden aus Gitterrosten (5) besteht, Vorrichtungen zum Spritzen der Farbe innerhalb des Gehäuses, Mittel zum Absaugen der Luft von unten durch die Gitterroste und Mittel zum Waschen (8, 10, 14; 20, 25) der Luft, die durch die Gitterroste (5) durchgetreten ist, mit einer flüssigen zirkulierenden Zusammensetzung, dadurch gekennzeichnet, dass sie Mittel zum Überfluten der Gitterroste mit der flüssigen Zusammensetzung aufweist.

8. Spritzkabine nach Anspruch 7, dadurch gekennzeichnet, dass die Mittel zum Überfluten der Gitterroste Mittel (12, 22) zum Verschliessen des Ausflusses der flüssigen Zusammensetzung in das Innere oder aus den Mitteln zur Wäsche sowie Überläufe (6) zum Entleeren der flüssigen Zusammensetzung für das Überfluten der Gitterroste aufweisen.

**Claims**

1. A process for washing gaseous effluents emerging from paint-applying booths and for removing paint from grating constituting the floor of said booths, wherein, upon the application of the paint, the gaseous effluents are washed with an aqueous washing composition, characterized in that a washing composition containing watersoluble detergent metallic salts is used, said salts being present in the composition in such proportion that the density of the composition is 1.1 to 1.45 and the pH of the solution is adjusted to be between 7 and 14, and, periodically after paint application, the grating is immersed in said composition.

2. A process according to claim 1, characterized in that the salts are selected from carbonates, phosphates, nitrates, nitrites, sulfates, silicates, acetates, formiates, lactates, chlorides and mixtures thereof.

3. A process according to claim 2, characterized in that there is employed a composition which comprises 7.5 to 30% by weight of potassium carbonate 1.5 to 5.6% by weight of phosphoric acid and 1.6 to 6.5% by weight of potash.

4. A process according to claim 2, characterized in that there is employed a composition which comprises 25 to 50% by weight of calcium nitrate and 25 to 40% by weight of sodium nitrate.

5. A process according to any one of the claims 1 to 4, characterized in that the grating is immersed in said composition prior to the application of the paint.

6. A process according to any one of the claims 1 to 5, characterized in that the grating is immersed by a flooding thereof.

7. A paint-applying booth for carrying out the process according to any one of the claims 1 to 6, of the type comprising an enclosure (1) whose floor is constituted by a grating (5), paint-applying means inside the enclosure, means for aspirating air downwardly through the grating and means (8, 10, 14; 20, 25) for washing air which has passed through the grating with a circulating liquid composition, characterized in that said cabin comprises means for flooding the grating with said liquid composition.

8. A booth, according to claim 7, characterized in that the means for flooding the grating comprise means (12, 22) for closing off the flow of the liquid composition inside or outside the washing means and overflows (6) for discharging the liquid composition flooding the grating.

FIG. 1

FIG. 2

FIG.3

0 134 869